# EUROPÄISCHE PATENTANMELDUNG

(11) **EP 0 684 161 A1**
(43) Veröffentlichungstag der Anmeldung: **29.11.1995**
(21) Anmeldenummer: 95107987.0
(22) Anmeldetag: 24.05.1995
(51) Int. Cl.: B60R 16/02

(54) **Wechselkern für Spiralkabeldose**

(30) Priorität: 27.05.1994 DE 4418657
(71) Anmelder: W.L. GORE & ASSOCIATES GmbH, D-85636 Putzbrunn (DE)
(72) Erfinder: Klier, Jürgen, D-63303 Dreieich (DE); Satzinger, Gerhard, D-91735 Muhr am See (DE); Schüle, Gerhard, D-91785 Pleinfeld (DE)
(74) Vertreter: Klunker . Schmitt-Nilson . Hirsch

(57) **Zusammenfassung**

Der erfindungsgemäße Wechselkern dient zur Montage einer eine im wesentlichen axiale Spiralkabeldosen-Innenöffnung 303 aufweisenden Spiralkabeldose 301 auf eine Befestigungszone eines Lenkstockes, wobei der Wechselkern 300 eine Außenfläche und eine im wesentlichen axiale Wechselkern-Innenöffnung 302 aufweist. Die Außengeometrie der Befestigungszone des Lenkstockes entspricht im wesentlichen komplementär der Innengeometrie der Wechselkern-Innenöffnung 302, und die Außengeometrie des Wechselkernes 300 entspricht im wesentlichen komplementär der Innengeometrie der Spiralkabeldosen-Innenöffnung 303. Die erfindungsgemäße Spiralkabeldose 301 ist zur Aufnahme einer Kabelspirale, insbesondere einer elektrischen Airbag-Kabelspirale geeignet und weist eine Dosen-Innenöffnung 303 zur Befestigung auf einem Befestigungsbereich eines Lenkstocks eines Kraftfahrzeuges sowie einen in die Dosen-Innenöffnung eingeführten Wechselkern 300 auf, wobei der Wechselkern 300 eine im wesentlichen axiale Wechselkern-Innenöffnung 302 aufweist, deren Innengeometrie im wesentlichen komplementär der Außengeometrie des Befestigungsbereiches des Lenkstockes entspricht und wobei die Innengeometrie der Dosen-Innenöffnung im wesentlichen komplementär der Außengeometrie des Wechselkernes (300) entspricht. Die Erfindung ist nicht auf Spiralkabeldosen 301 mit einer eingelegten Kabelspirale beschränkt; sie erstreckt sich auch auf andere Kabelführungsvorrichtungen, die die Führung eines elektrischen Kabels oder anderer längsgestreckter biegeschlaffer Teile, z.B. Seile oder Schläuche, von einem ortsfesten Anschlußpunkt zu einem um eine Drehachse drehbar gelagerten Anschlußpunkt gestatten.

## Beschreibung

Die Erfindung betrifft einen Wechselkern für eine Spiralkabeldose, die zur Aufnahme und Installation einer Kabelspirale, insbesondere einer elektrischen Airbag-Kabelspirale, geeignet ist. Weiterhin betrifft die Erfindung eine Spiralkabeldose, die zur Aufnahme und Installation einer Kabelspirale geeignet ist. Schließlich betrifft die Erfindung die Verwendung eines Wechselkernes bei der Montage einer Spiralkabeldose.

Bekanntlich handelt es sich bei einem Airbag um einen mit einem Gas füllbaren Prallschutzsack in einem Kraftfahrzeug, der beim Aufprall des Kraftfahrzeuges auf ein Hindernis durch eine Steuereinrichtung ausgelöst und in Bruchteilen von Sekunden aufgeblasen wird, um einen Aufprallschutz für Kraftfahrzeuginsassen zu schaffen. Hierdurch sollen zumindest größere Verletzungen bei den Kraftfahrzeuginsassen vermieden werden.

Üblicherweise wird eine Airbag-Einrichtung im Pralltopf eines Fahrzeuglenkrades installiert. Da die das Auslösen und Aufblähen des Airbags verursachende Steuereinrichtung außerhalb des Lenkrades installiert ist, muß dafür Sorge getragen werden, daß die elektrische Verbindung zwischen dem Airbag und der Steuereinrichtung gewisse Relativdrehungen zwischen dem im Pralltopf des Lenkrades sich zusammen mit diesem mitdrehenden Airbag und der feststehenden Steuereinrichtung ermöglicht.

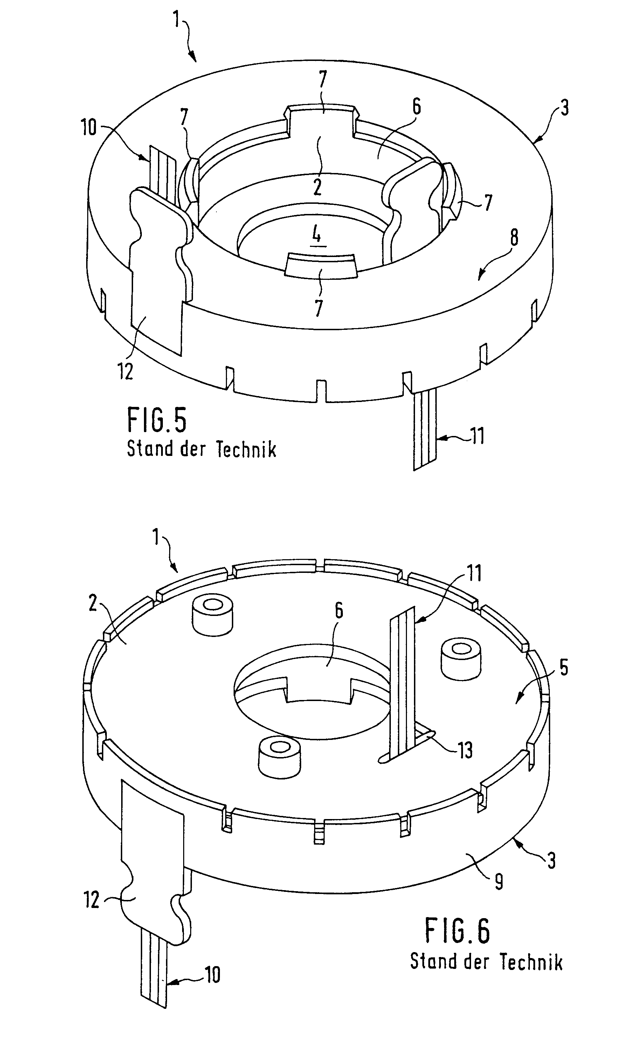

Zur Schaffung dieser elektrischen Verbindung ist es z.B. aus der Druckschrift DE-C1-42 23 308 bekannt, eine Spiralkabeldose zu verwenden, in der ein spiralförmig aufgewickeltes Flachkabel aufgenommen ist. Diese in Fign. 5 und 6 dargestellte bekannte Spiralkabeldose ist zwischen dem Lenkstock und dem Pralltopf des Lenkrades angeordnet, so daß Endbereiche des in der Spiralkabeldose aufgenommene Flachkabels zum einen zu dem im Pralltopf angeordneten Airbag und zum anderen zu der Steuereinrichtung, etwa durch den Lenkstock hindurch, geführt sind.

Die bekannte Spiralkabeldose 1 weist ein durch ein Innenteil der Spiralkabeldose 1 gebildetes Dosenunterteil 2 und ein durch ein Außenteil der Spiralkabeldose 1 gebildetes Dosenoberteil 3 auf. Bei auf das Dosenunterteil 2 aufgesetztem Dosenoberteil 3 ist dazwischenliegend ein Kabelaufnahmeraum gebildet, der zur Aufnahme einer Kabelspirale (nicht dargestellt) dient. Das Dosenunterteil 2 weist eine mit einer Mittenöffnung 4 versehene Ringscheibenwand 5 und eine im wesentlichen senkrecht zu dieser angeordnete Innenzylinderwand 6 auf. Die Innenzylinderwand 6 ist an ihrem oberen, von der Ringscheibenwand 5 abgewandten Rand mit über den Umfang verteilt angeordneten Rasteinrichtungen 7 versehen. Die Rasteinrichtungen 7 weisen nach außen gerichtete Rastfortsätze auf, die nach dem Zusammenfügen des Dosenunterteils 2 und des Dosenoberteils 3 hinter dem Innenumfangsrand einer mit einer Mittenöffnung versehenen Ringscheibenwand 8 des Dosenoberteils 3 einrasten und somit den Zusammenhalt der Dosenteile 2,3 lösbar sichern. Zur Bildung des Dosenoberteils 3 schließt am äußeren Umfangsrand der Ringscheibenwand 8 eine im wesentlichen senkrecht zu dieser angeordnete Außenzylinderwand 9 an. Zur Durchführung von Kabelenden 10,11 des die Kabelspirale bildenden Flachkabels und zur Ausbildung von Winkelendbereichen der Kabelspirale sind in der Außenzylinderwand 9 des Dosenoberteils 3 und in der Innenzylinderwand 6 des Dosenunterteils 2 Kabeldurchführungen 12 bzw. 13 vorgesehen.

Zur Montage wird diese bekannte Spiralkabeldose mit ihrem Dosenunterteil 2 auf einen Lenkstock (nicht dargestellt) aufgesetzt. Dies setzt voraus, daß die Außengeometrie sowie die Außenmaße des Lenkstocks genau der Innengeometrie bzw. den Innenmaßen der Innenzylinderwand 6 des Dosenunterteils entspricht. Aus fertigungstechnischen Gründen ist es erstrebenswert, die bekannte Spiralkabeldose 1 mit fertig eingelegter Kabelspirale vormontiert in die Kraftfahrzeugmontage einzubringen. Dies hat dann zur Folge, daß für jeden der zahlreichen, in der Kraftfahrzeugindustrie zur Verwendung gelangenden Lenkstocktypen vormontierte Spiralkabeldosen mit passend angefertigten Dosenteilen vorgehalten werden müssen. Eine derart große Typenvielfalt an vorrätig zu haltenden Spiralkabeldosen birgt erhebliche wirtschaftliche und lagertechnische Probleme.

Auch aus der Druckschrift DE-U1-93 00 909 ist eine Spiralkabeldose in einem Kraftfahrzeug-Lenkrad mit einem Airbag bekannt.

Aufgabe der Erfindung ist es daher, die Montagefähigkeit einer Spiralkabeldose derart zu gestalten, die Typenvielfalt vermindert und Kosten eingespart werden.

Diese Aufgabe wird erfindungsgemäß gelöst durch einen Wechselkern für eine Spiralkabeldose nach Anspruch 1 sowie durch eine Spiralkabeldose nach Anspruch 7 und schließlich ferner durch die Verwendung eines Wechselkernes nach Anspruch 13. Nichttriviale und vorteilhafte Weiterbildungen des Erfindungsgegenstandes sind den Unteransprüchen zu entnehmen.

Der erfindungsgemäße Wechselkern dient zur Montage einer eine im wesentlichen axiale Spiralkabeldosen-Innenöffnung aufweisenden Spiralkabeldose auf eine Befestigungszone eines Lenkstokkes, wobei der Wechselkern eine Außenfläche und eine im wesentlichen axiale Wechselkern-Innenöffnung aufweist. Die Innengeometrie der Wechselkern-Innenöffnung entspricht im wesentlichen komplementär der Außengeometrie der Befestigungszone des Lenkstockes und die Außengeometrie des Wechselkernes entspricht im wesentlichen komplementär der Innengeometrie der Spiralkabeldosen-Innenöffnung, d.h. einer Ausnehmung an einem Teil entspricht ein dazu passender komplementärer Vorsprung am anderen Teil.

Die erfindungsgemäße Spiralkabeldose ist zur Aufnahme einer Kabelspirale, insbesondere einer elektrischen Airbag-Kabelspirale geeignet und weist eine Dosen-Innenöffnung zur Befestigung auf einem Befestigungsbereich eines Lenkstocks eines Kraftfahrzeuges sowie einen in die Dosen-Innenöffnung eingeführten Wechselkern auf, wobei der Wechselkern eine im wesentlichen axiale Wechselkern-Innenöffnung aufweist, deren Innengeometrie der Außengeometrie des Befestigungsbereiches des Lenkstockes komplementär entspricht und wobei die Innengeometrie der Dosen-Innenöffnung im wesentlichen der Außengeometrie des Wechselkernes komplementär entspricht, d.h. einer Ausnehmung an einem Teil entspricht ein dazu passender komplementärer Vorsprung am anderen Teil.

Die Erfindung ist nicht auf Spiralkabeldosen mit einer eingelegten Kabelspirale beschränkt; sie erstreckt sich auch auf andere Kabelführungsvorrichtungen, die die Führung eines elektrischen Kabels oder anderer längsgestreckter biegeschlaffer Teile, z.B. Seile oder Schläuche, von einem ortsfesten Anschlußpunkt zu einem um eine Drehachse drehbar gelagerten Anschlußpunkt gestatten.

Die Erfindung wird im folgenden anhand einiger Ausführungsbeispiele näher erläutert:
Fig. 1 zeigt eine perspektivische Ansicht einer ersten Ausführungsform eines erfindungsgemäßen Wechselkernes;
Fig. 2 zeigt eine perspektivische Ansicht einer zweiten Ausführungsform eines erfindungsgemäßen Wechselkernes;
Fig. 3 zeigt eine Explosionsdarstellung eines erfindungsgemäß in eine Spiralkabeldose eingesetzten Wechselkernes;
Fig. 4 zeigt in einer perspektivischen, teilweise angeschnittenen Darstellung einen in eine Spiralkabeldose erfindungsgemäß eingesetzten Wechselkern;
Fig. 5 zeigt eine perspektivische Ansicht der Unterseite einer Spiralkabeldose nach dem Stand der Technik;
Fig. 6 zeigt eine perspektivische Ansicht der Oberseite der bekannten Spiralkabeldose aus Fig. 5.

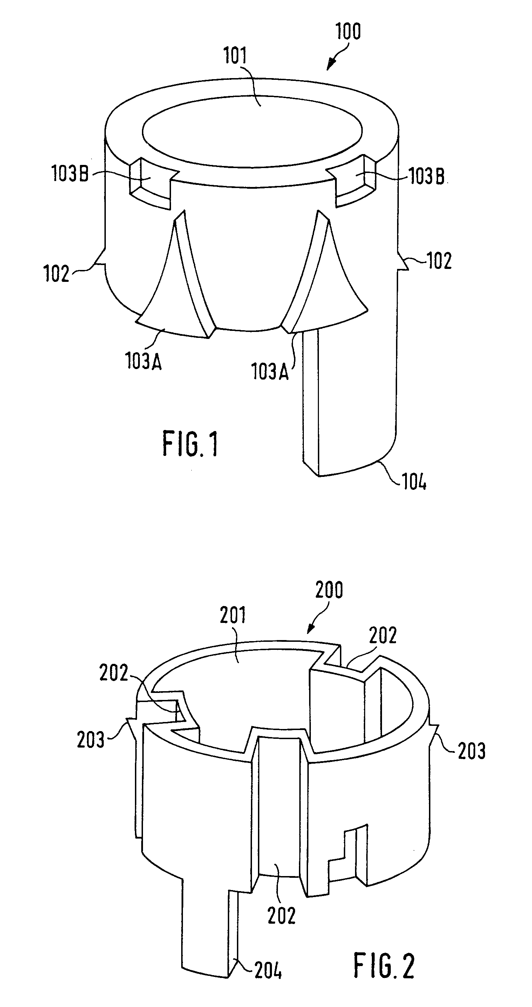

Fig. 1 zeigt eine perspektivische Ansicht einer ersten Ausführungsform eines erfindungsgemäßen Wechselkernes 100, die eine im wesentlichen hohlzylindrische Gesamtform aufweist. Der Wechselkern 100 wird an einer durchgehenden zylindrischen Innenausnehmung 101 auf einen Befestigungsbereich des Lenkstockes (nicht dargestellt) aufgesetzt. Dieser Wechselkern 100 wird von unten nach oben, d. h. von der dem Lenkstock zugewandten Seite der Spiralkabeldose (nicht dargestellt) nach oben in deren im wesentlichen axiale Mittenöffnung eingeführt und durch Rastspitzen 102 arretiert. Am Außenumfang des erfindungsgemäßen Wechselkernes 100 sind selbstzentrierende Führungselemente in Form von Vorsprüngen 103A und Kodierungselemente in Form von Ausnehmungen 103B angeordnet, die in entsprechende Ausnehmungen bzw. Vorsprünge der Spiralkabeldose eingreifen. Mit den Führungselementen wird eine vorbestimmte relative Drehstellung zwischen der Spiralkabeldose und dem in die Spiralkabeldose eingesetzten Wechselkern 100 sichergestellt. Mit den Kodierungselementen, die auch durch Vorsprünge am Wechselkern 100 gebildet sein können, wird verhindert, daß ein nicht vorgesehener Dosentyp montiert wird. Die in Fig. 1 dargestellte Ausführungsform eines Wechselkernes 100 weist einen nach unten in Richtung auf den Lenkstock (nicht dargestellt) gerichteten Rücksteller 104 zum Zurücksetzen von einem Blinkerhebel etc. (nicht dargestellt) auf.

Fig. 2 zeigt eine perspektivische Ansicht einer zweiten Ausführungsform eines erfindungsgemäßen Wechselkernes 200, die ebenfalls eine im wesentlichen hohlzylinderartige Gesamtstruktur aufweist. In eine axiale Innenausnehmung 201 vorspringende Erhebungen 202 dienen als Codierelemente, um die Montage des Wechselkernes 200 auf einen dafür nicht passenden und auch nicht vorgesehenen Lenkstock (nicht dargestellt) zu verhindern. Mehrere Rastspitzen 203 dienen zum Befestigen des Wechselkernes 200 in der Innenzylinderwand einer Spiralkabeldose (nicht dargestellt), wobei bei der in Fig. 2 dargestellten Ausführungsform die Rastspitzen 203 derart ausgebildet ist, daß der Wechselkern 200 von oben nach unten, d.h, von der dem Lenkrad (nicht dargestellt) zugewandten Seite, in die Spiralkabeldose einzuführen ist. Ein Rücksteller 204 dient zum Rücksetzen von Blinkerhebeln etc. in der Mittenstellung des Lenkrades (nicht dargestellt).

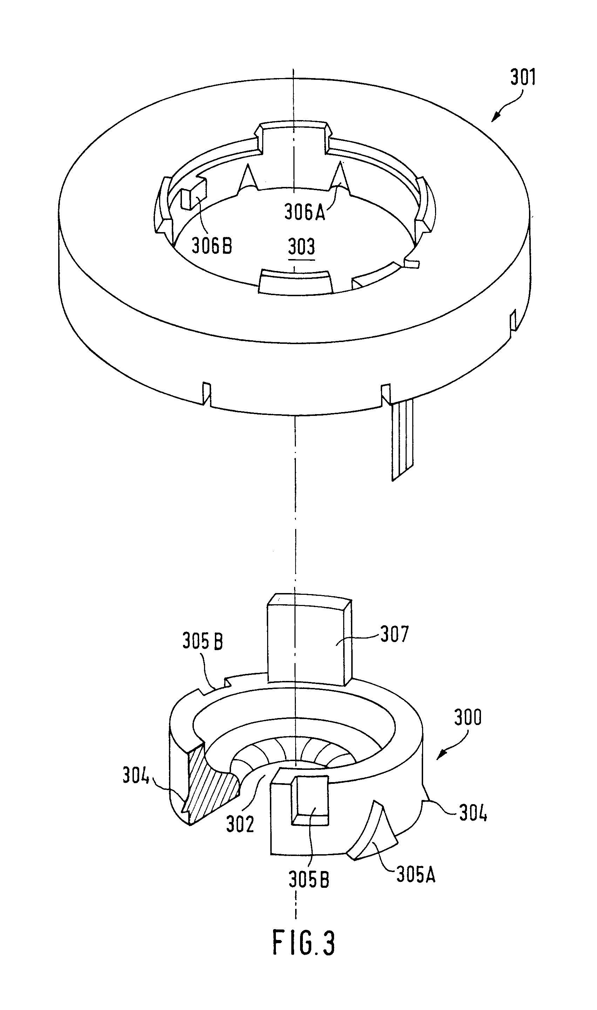

Fig. 3 zeigt eine Explosionsdarstellung eines erfindungsgemäß in eine Spiralkabeldose 301 eingesetzten Wechselkernes 300. Der Wechselkern 300 wird an einer durchgehenden zylindrischen Innenausnehmung 302 auf einen Befestigungsbereich des Lenkstockes (nicht dargestellt) aufgesetzt. Dieser Wechselkern 300 wird von unten nach oben, d. h. von der dem Lenkstock zugewandten Seite der Spiralkabeldose 301 oben in deren im wesentlichen axiale Mittenöffnung 303 eingeführt und durch Rastspitzen 304 arretiert. Am Außenumfang des Wechselkernes 300 sind selbstzentrierende Führungselemente in Gestalt von vorspringenden Erhebungen 305A und Kodierungselemente in Form von Ausnehmungen 305B angeordnet, die in entsprechende Ausnehmungen 306A bzw. Vorsprünge 306B der Spiralkabeldose 301 eingreifen und eine definierte relative Drehstellung zwischen Wechselkern 300 und Spiralkabeldose 301 bewirken bzw. verhindern, daß versehentlich ein nicht vorgesehener Dosentyp montiert wird. Der Wechselkern 300 weist einen von einer Stirnseite in Richtung auf den Lenkstock (nicht dargestellt) vorspringenden Rücksteller 204 auf, der zum Rücksetzen von Blinkerhebeln etc. (nicht dargestellt) in der Mittenstellung des Lenkrades (nicht dargestellt) dient.

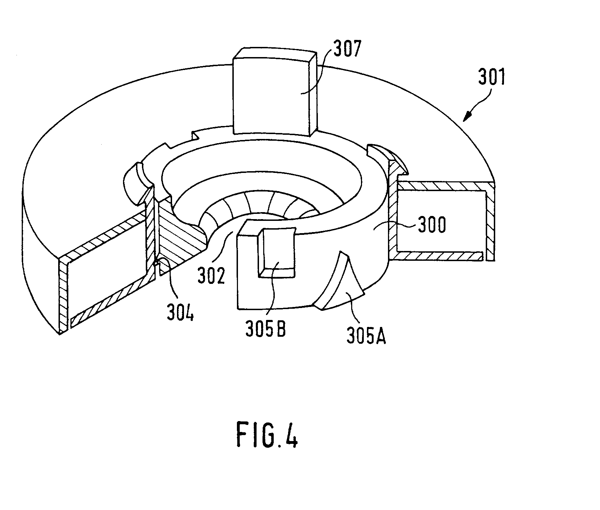

Fig. 4 zeigt in einer perspektivischen, teilweise angeschnittenen Darstellung den in Fig. 3 als Explosionsdarstellung dargestellten, in eine Spiralkabeldose 301 erfindungsgemäß eingesetzten Wechselkern 300. Die Verwendung der Bezugszeichen entspricht derjenigen aus Fig. 3.

Die bei der in Fig. 1 gezeigten Ausführungsform am Außenumfang des Wechselkernes 100 angeordneten Codierungselemente 103 und die bei der in Fig. 2 gezeigten Ausführungsform in der Innenausnehmung des Wechselkernes 200 angeordneten Codierungselemente 202 können auch vorteilhaft miteinander kombiniert werden, so daß ein Wechselkern geschaffen wird, der sowohl zum Lenkstock hin als auch bezüglich der Spiralkabeldose durch eine Codierung gegen Montagefehler geschützt ist.

## Patentansprüche

1. Wechselkern (100;200;300) zur Montage einer eine im wesentlichen axiale Spiralkabeldosen-Innenöffnung aufweisenden Spiralkabeldose (301) auf eine Befestigungszone eines Lenkstockes,
a) wobei der Wechselkern (100;200;300) eine Außenfläche und eine im wesentlichen axiale Wechselkern-Innenöffnung (101; 201;301) aufweist,
b) wobei die Innengeometrie der Wechselkern-Innenöffnung (101;201;301) im wesentlichen der Außengeometrie der Befestigungszone des Lenkstockes komplementär entspricht, und
c) wobei die Außengeometrie des Wechselkernes im wesentlichen der Innengeometrie der Spiralkabeldosen-Innenöffnung komplementär entspricht.

2. Wechselkern (200) nach Anspruch 1, dadurch gekennzeichnet, daß die Wechselkern-Innenöffnung (201) radiale Vorsprünge und/oder Ausnehmungen (202) aufweist.

3. Wechselkern (100;300) nach Anspruch 1, dadurch gekennzeichnet, daß die Außengeometrie des Wechselkerns (100;300) radiale Vorsprünge und/oder Ausnehmungen (103A,103B) aufweist.

4. Wechselkern nach Anspruch 1, dadurch gekennzeichnet, daß die Wechselkern-Innenöffnung radiale Vorsprünge und/oder Ausnehmungen aufweist und daß die Außengeometrie des Wechselkerns radiale Vorsprünge und/oder Ausnehmungen aufweist.

5. Wechselkern (100;200;300) nach einem der Ansprüche 1-4, dadurch gekennzeichnet, daß die Außengeometrie des Wechselkerns (100; 200;300) Rastvorsprünge (102;203;303) aufweist.

6. Wechselkern (100;200;300) nach einem der Ansprüche 1-5, gekennzeichnet durch einen an einer Stirnseite angeordneten axialen Vorsprung (104;204;304).

7. Spiralkabeldose (301) zur Aufnahme einer Kabelspirale, insbesondere einer elektrischen Airbag-Kabelspirale, die eine Dosen-Innenöffnung (303) zur Befestigung auf einem Befestigungsbereich eines Lenkstocks eines Kraftfahrzeuges aufweist,
gekennzeichnet durch
a) einen in die Dosen-Innenöffnung (303) eingeführten Wechselkern (300),
b) wobei der Wechselkern (300) eine im wesentlichen axiale Wechselkern-Innenöffnung (302) aufweist, deren Innengeometrie im wesentlichen komplementär der Außengeometrie des Befestigungsbereiches des Lenkstockes entspricht und
c) wobei die Innengeometrie der Dosen-Innenöffnung (303) im wesentlichen komplementär der Außengeometrie des Wechselkernes (300) entspricht.

8. Spiralkabeldose (301) nach Anspruch 7, dadurch gekennzeichnet, daß die Wechselkern-Innenöffnung (302) radiale Vorsprünge und/oder Ausnehmungen aufweist.

9. Spiralkabeldose (301) nach Anspruch 7, dadurch gekennzeichnet, daß die Außengeometrie des Wechselkerns (300) radiale Vorsprünge und/oder Ausnehmungen (305A,305B) aufweist.

10. Spiralkabeldose (301) nach Anspruch 7, dadurch gekennzeichnet, daß die Wechselkern-Innenöffnung (302) radiale Vorsprünge und/oder Ausnehmungen aufweist und daß die Außengeometrie des Wechselkerns (300) radiale Vorsprünge und/oder Ausnehmungen (305A,305B) aufweist.

11. Spiralkabeldose (301) nach einem der Ansprüche 7-10, dadurch gekennzeichnet, daß die Außengeometrie des Wechselkerns (300) mindestens einen Rastvorsprung (304) aufweist, der mit einer entsprechenden Ausnehmung in der Dosen-Innenöffnung (303) verrastet.

12. Spiralkabeldose (301) nach einem der Ansprüche 7-10, gekennzeichnet durch einen an einer Stirnseite des Wechselkernes (300) angeordneten axialen Vorsprung (307).

13. Verwendung eines Wechselkernes (100;200) nach einem der Ansprüche 1-5 zur Montage einer Spiralkabeldose auf einen Lenkstock.
